# EUROPEAN PATENT APPLICATION

(11) **EP 2 533 553 A1**
(43) Date of publication of application: **12.12.2012**
(21) Application number: 10845020.6
(22) Date of filing: 04.02.2010
(51) Int. Cl.: H04W 4/02

(54) **METHOD AND DEVICE FOR MTC TERMINAL DEVICE DETECTING PREDETERMINED EVENTS AND INFORMING MTC SERVER**

(71) Applicant: Alcatel Lucent, 75007 Paris (FR)
(72) Inventor: DU, Hongfei, Shanghai 201206 (CN); CHEN, Yu, Shanghai 201206 (CN)
(74) Representative: Hervouet, Sylvie
(86) International application number: PCT/CN2010/070507
(87) International publication number: WO 2011/094935

(57) **Abstract**

The invention proposes a detecting and reporting method and apparatus in a user equipment of a machine type communication based communication system. The MTC user equipment firstly detects whether a predetermined event occurs; and the MTC user equipment transmits a first report message to one or more servers if the predetermined event occurs. With the technical solution of the invention, the MTC user equipment can detect the occurrence of the predetermined event, for example, the MTC user equipment being stolen, the MTC user equipment being in illegal movement, the MTC user equipment being damaged, the MTC user equipment being powered off or a predetermined data value measured by the MTC user equipment being above or below a predetermined threshold, and notify an MTS server. The MTC server can take the further action upon acquisition of the relevant condition, for example, recover the MTC user equipment, bill the user of the MTC user equipment, charge the user of the MTC user equipment, etc.

## Description

### Field of the invention

The present disclosure relates to a communication system and particularly to a Machine-Type Communication (MTC) based Communication System.

### Background of the invention

Machine to Machine (M2M) refers to transmission of data from one terminal to another terminal, that is, exchange of data between machines through GSM/GPRS, UMTS/HSDPA and CDMA/EVDO modules. At present, M2M is generally applied in the fields of security surveillance, automatic vending machines, public traffic systems, vehicle surveillance, GPS positioning, scheduling and management, remote meter reading management, industry flow automatization, electric machineries, city informationalization, etc.

According to 3GPP TS 23.888, when an MTC user equipment is stolen, in illegal movement, suddenly damaged or powered off, the MTC user equipment shall be able to detect these occurrences and notify the occurrences to an MTS server. Upon collection of relevant information, the MTC server can take further actions, for example, recover the MTC user equipment, bill or charge the user of the MTC user equipment, etc.

However, for above problem, there is no solution available so far.

### Summary of the invention

In view of this, according to an embodiment of the invention, there provides a method of detecting and reporting in a user equipment of a machine type communication based communication system. The method comprises the steps of: a. detecting whether a predetermined event occurs; and b. transmitting a first report message to one or more servers if the predetermined event occurs.

Optionally, after the step b, the method further comprises the step of: c. transmitting a second report message to the one or more servers.

Optionally, the predetermined event comprises any one of:
- the user equipment being stolen;
- the user equipment being in an illegal movement;
- the user equipment being damaged;
- the user equipment being powered off; and
- a predetermined data value measured by the user equipment being above or below a predetermined threshold.

Optionally, the step b further comprises the steps of:
- encoding the first report message; and
- transmitting the encoded first report message to the one or more servers.

Optionally, the step b further comprises the step of: transmitting the first report message to the one or more servers via a short message.

Optionally, the step c further comprises the step of: transmitting the second report message to the one or more servers via a short message.

Optionally, the step c further comprises the steps of: encoding the second report message; and transmitting the encoded second report message to the one or more servers.

Optionally, the encoding is a Turbo encoding.

According to another embodiment of the invention, there provides a detecting and reporting apparatus of detecting and reporting in a user equipment of a machine type communication based communication system. The detecting and reporting apparatus comprises: a first detecting device for detecting whether a predetermined event occurs; and a first transmitting device for transmitting a first report message to one or more servers if the predetermined event occurs.

Optionally, the detecting and reporting apparatus further comprises: a second transmitting device for transmitting a second report message to the one or more servers.

Optionally the predetermined event comprises any one of:
- the user equipment being stolen;
- the user equipment being in an illegal movement;
- the user equipment being damaged;
- the user equipment being powered off; and
- a predetermined data value measured by the user equipment being above or below a predetermined threshold.

Optionally, the first transmitting device is further for transmitting the first report message to the one or more servers via a short message.

Optionally, the first transmitting device further includes: a first encoding device for encoding the first report message; and a third transmitting device for transmitting the encoded first report message to the one or more servers.

Optionally, the second transmitting device is further for transmitting the second report message to the one or more servers via a short message.

Optionally, the second transmitting device further includes: a second encoding device for encoding the second report message; and a fourth transmitting device for transmitting the encoded second report message to the one or more servers.

With the technical solution of the invention, the MTC user equipment can detect the occurrence of a predetermined event, for example, the MTC user equipment being stolen, the MTC user equipment being in illegal movement, the MTC user equipment being damaged or powered off, etc., and notify the MTS server. Upon acquisition of the relevant information, the MTC server can take the further action, for example, recover the MTC user equipment, bill or charge the user of the MTC user equipment, etc.

### Brief description of drawings

Other objects, features and advantages of the invention will become more apparent and prominent from the following description of non-limiting embodiments with reference to the drawings in which:
Fig.1 illustrates a network topology diagram of a machine type communication based communication system according to the invention;
Fig.2 illustrates a flow chart of a method of detecting and reporting in a user equipment of a machine type communication based communication system according to an embodiment of the invention; and
Fig.3 illustrates a structural block diagram of a detecting and reporting apparatus in a user equipment of a machine type communication based communication system according to an embodiment of the invention.

Identical or similar reference numerals denote identical or similar step features/devices (modules).

### Detailed description of embodiments

The technical solutions of the invention will be described below with reference to the drawings.

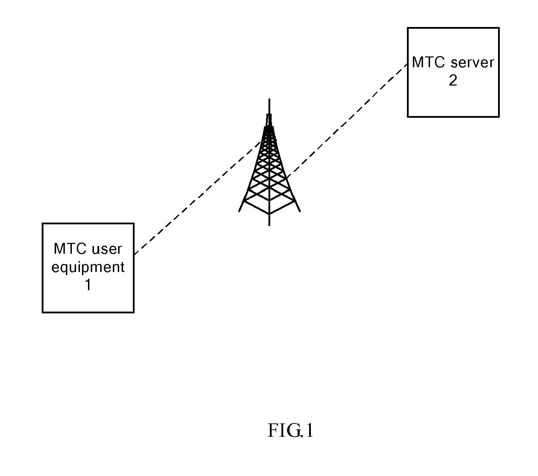

Fig.1 illustrates a network topology diagram of a machine type communication based communication system according to the invention.

In Fig.1, it illustrates an MTC user equipment 1 and an MTC server 2. The MTC user equipment 1 and the MTC user server 2 communication with each other over the Public Land Mobile Network (PLMN). In an embodiment, one or more network devices, e.g., a base station that is responsible for forwarding data and signalings between the MTC server 2 and the MTC user equipment 1, may further be included between the MTC server 2 and the MTC user equipment 1.

The MTC user equipment 1 includes but will not be limited to a mobile phone, a personal computer, an intelligent electric meter, a camera, an on-vehicle device, a medical device, etc.

The MTC server 2 includes but will not be limited to a computer terminal, a database, a manager, etc.

Those ordinarily skilled in the art shall appreciate that although there is illustrated only one MTC user equipment that communicates with the MTC server 2, the machine-type communication based communication system can include a plurality of associated MTC user equipments communicating with the MTC server in a specific application. A repeated description thereof will be omitted here for the sake of conciseness.

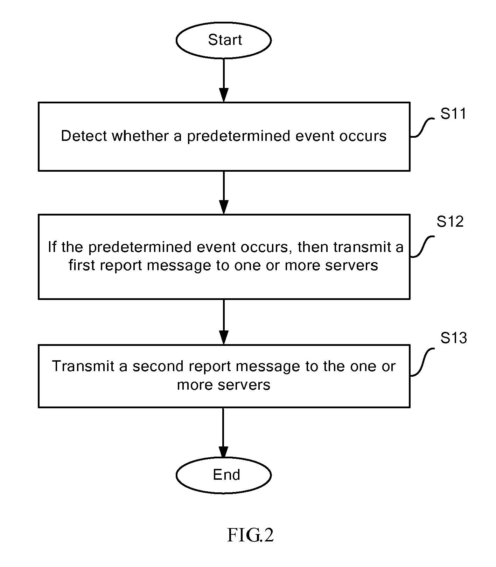

Fig.2 illustrates a flow chart of a method of detecting and reporting in a user equipment of a machine type communication based communication system according to an embodiment of the invention. The flow chart of the method illustrated in Fig.2 will be described in detail below with reference to Fig.1. Reference will also be made here to the foregoing description of Fig.1.

Firstly in Step S11, the MTC user equipment 1 detects whether a predetermined event occurs.

Optionally the predetermined event includes any one of:
- The user equipment 1 being stolen;
- The user equipment 1 being in an illegal movement;
- The user equipment 1 being damaged;
- The user equipment 1 being powered off;
- A predetermined data value measured by the user equipment 1 being above a predetermined threshold; and
- A predetermined data value measured by the user equipment 1 being below a predetermined threshold.

It shall be noted that the predetermined events listed above are merely for the purpose of examples, and those skilled in the art shall appreciate that the predetermined event of the invention includes but will not be limited to the foregoing several instances. A repeated description thereof will be omitted here for the sake of conciseness.

In an embodiment, the MTC user equipment 1 can determine that the MTC user equipment 1 is stolen through, for example, detecting such a trigger condition that the boot password is entered incorrectly, the electric wire is cut off, etc.

In another embodiment, the MTC user equipment 1 can detect that the MTC user equipment is in illegal movement through, for example, GPS positioning. For example, when the MTC user equipment 1 is an on-vehicle device and the taxi on which the on-vehicle device is installed travels beyond a specified area, the on-vehicle device can determine that the taxi is traveling beyond the specified area and in illegal movement through GPS positioning.

In a further embodiment, the MTC user equipment 1 can compare the measured predetermined data value with a predetermined threshold, and if the predetermined data value is above or below the predetermined threshold, then the MTC user equipment 1 determines the occurrence of the predetermined event. For example, the MTC user equipment 1 is a temperature sensor, and after the temperature sensor measures the current ambient temperature value, it compares the ambient temperature value with the predetermined threshold. If the measured current ambient temperature value is above the predetermined threshold, then the potential occurrence of a fire is determined.

If the MTC user equipment 1 detects the occurrence of the predetermined event, then in Step S12, the MTC user equipment 1 transmits a first report message to the MTC server 2.

In an embodiment, when the predetermined event is that the MTC user equipment 1 is in illegal movement, for example, the taxi on which the MTC user equipment 1 is installed travels beyond a specified area, then the first report message includes information of the geographical location where the MTC user equipment 1 is currently located.

In another embodiment, when the predetermined event is that the predetermined data value measured by the MTC user equipment 1 is above a predetermined threshold, for example, the current ambient temperature detected by the MTC user equipment 1 is above a predetermined threshold, then the first report message includes information of the current ambient temperature.

When the MTC user equipment 1 detects the occurrence of the predetermined event, optionally, the MTC user equipment 1 transmits the first report message to the MTC server 2 via a Short Message (SMS) or a General Packet Radio Service (GPRS).

In order to avoid the occurrence of the transmission error, the loss of data or other situations, in an embodiment, the MTC user equipment 1 firstly encodes the first report message and then transmits the encoded first report message to the MTC server 2.

Optionally, the encoding includes but will not be limited to the Turbo encoding, the CRC (Cyclic Redundancy Check) encoding, etc.

In another embodiment, the MTC user equipment 1 can further transmit the first report message to one or more reachable MTC servers.

Upon reception of the first report message from the MTC user equipment 1, the MTC server 2 determines the corresponding action to be taken according to the first report message. For example, the MTC user equipment 1 is recovered, the service provided to the MTC user equipment 1 is terminated, the user of the MTC user equipment 1 is charged for an extra fee, etc.

In an embodiment, when the MTC user equipment 1 is a camera and the predetermined event is that the camera is damaged, then after the MTC server 2 receives the first report message from the MTC user equipment 1, the repairer can be dispatched to repair or replace the camera immediately so as to ensure its normal operation.

In an embodiment, when the MTC user equipment 1 is an on-vehicle device and the predetermined event is that the taxi on which the on-vehicle device travels beyond a specified area, then after the MTC server 2 receives the first report message from the MTC user equipment 1, an extra fee can be charged for the tenant according to information of the geographical location of the taxi included in the first report message.

After the MTC user equipment 1 transmits the first report message to the MTC server 2, optionally, in Step S 13, the MTC user equipment 1 can continue to transmit a second report message to the MTC server 2.

Optionally, the MTC user equipment 1 can transmit the second report message to the MTC server 2 actively after transmitting the first report message to the MTC server 2. For example, the MTC user equipment 1 transmits the second report message to the MTC server periodically.

The MTC user equipment 1 can alternatively transmit the second report message to the MTC server 2 passively. For example, the MTC user equipment 1 will not transmit the second report message to the MTC server 2 until it receives a request message from the MTC server 2.

Optionally the MTC server 1 transmits the second report message to the MTC server via a Short Message (SMS) or a General Packet Radio Service (GPRS).

In order to avoid the occurrence of the transmission error, the loss of data or other situations, in an embodiment, the MTC user equipment 1 firstly encodes the second report message and then transmits the encoded second report message to the MTC server 2.

Optionally, the encoding includes but will not be limited to the Turbo encoding, the CRC (Cyclic Redundancy Check) encoding, etc.

In another embodiment, the MTC user equipment 1 can further transmit the second report message to one or more reachable MTC servers.

In an embodiment, the MTC user equipment 1 is an on-vehicle device and the predetermined event is that the taxi on which the on-vehicle device is installed travels beyond a specified area. When the MTC user equipment 1 detects the occurrence of the predetermined event, the MTC user equipment 1 transmits the first report message to the MTC server 2. The first report message includes information of the geographical location where the MTC user equipment 1 is currently located.

When the taxi continues traveling beyond the specified area, the MTC user equipment 1 will transmit the information of the geographical location of the taxi constantly to the MTC server via the second report message.

The MTC server 2 can know the travel route of the taxi beyond the specified area through the information of the geographical location included in the second report message, and thereby charge the user for an extra fee.

In an embodiment, the MTC user equipment 1 is a temperature sensor and the predetermined event is that the current ambient temperature value measured by the temperature sensor is above a predetermined threshold. When the MTC user equipment 1 detects the occurrence of the predetermined event, the MTC user equipment 1 transmits the first report message to the MTC server 2. The first report message includes the current ambient temperature value measured by the temperature sensor.

Thereafter, the temperature sensor will detect the current ambient temperature value constantly and transmit the detected current ambient temperature value constantly to the MTC server 2 through the second report message.

The MTC server 2 takes the relevant action to prevent a fire according to the ambient temperature value included in the second report message.

It shall be noted that the technical solution of the invention has been described above merely by an example where one MTC user equipment 1 detects whether the predetermined event occurs and then transmits the first report message to the MTC server.

In another embodiment of the machine-type communication based communication system, a plurality of associated MTC user equipments can be included, and when the plurality of associated MTC user equipments detect the occurrence of the predetermined event at the same time, optionally the plurality of associated MTC user equipments can transmit only one first report message to the MTC server.

Optionally, the MTC server can specify in advance which one of the plurality of associated MTC user equipments shall transmit the first report message to the MTC server upon occurrence of the predetermined event.

Alternatively, the plurality of MTC servers can coordinate with each other to select one of the plurality of the MTC user equipments for transmission of the first report message to the MTC servers.

When there are a large number of MTC user equipments, optionally the number of transmitted first report messages shall be reduced to the possible fullest extent while encoding the transmitted first report messages for the purpose of a tradeoff between the utilization ratio of resources and the reliability of transmission.

The technical solutions of the invention have been described above from the perspective of steps of method, and the technical solutions of the invention will be further described below from the perspective of modules of apparatus.

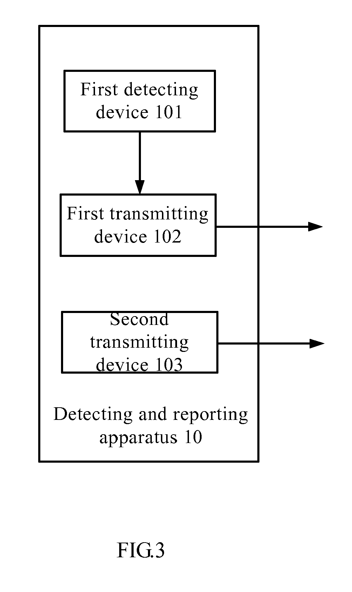

Fig.3 illustrates a structural block diagram of a detecting and reporting apparatus in a user equipment of a machine type communication based communication system according to an embodiment of the invention. The detecting and reporting apparatus 10 illustrated in Fig.3 will be described in detail below with reference to Fig.1. Reference will also be made here to the foregoing description of Fig.1.

In Fig.3, the detecting and reporting apparatus 10 includes a first detecting device 101, a first transmitting device 102 and a second transmitting device 103.

Firstly, the first detecting device 101 included in the detecting and reporting apparatus 10 of the MTC user equipment 1 detects whether a predetermined event occurs.

Optionally the predetermined event includes any one of:
- The user equipment 1 being stolen;
- The user equipment 1 being in an illegal movement;
- The user equipment 1 being damaged;
- The user equipment 1 being powered off;
- A predetermined data value measured by the user equipment 1 being above a predetermined threshold; and
- A predetermined data value measured by the user equipment 1 being below a predetermined threshold.

It shall be noted that the predetermined events listed above are merely for the purpose of examples, and those skilled in the art shall appreciate that the predetermined event of the invention includes but will not be limited to the foregoing several instances. A repeated description thereof will be omitted here for the sake of conciseness.

In an embodiment, the first detecting device 101 included in the detecting and reporting apparatus 10 can determine that the MTC user equipment 1 is stolen through, for example, detecting such a trigger condition that that boot password is entered incorrectly, the electric wire is cut off, etc.

In another embodiment, the first detecting device 101 can detect that the MTC user equipment is in illegal movement through, for example, GPS positioning. For example, when the MTC user equipment 1 is an on-vehicle device and the taxi on which the on-vehicle device is installed travels beyond a specified area, the on-vehicle device can determine that the taxi is traveling beyond the specified area and in illegal movement through GPS positioning.

In a further embodiment, the first detecting device 101 can compare the measured predetermined data value with a predetermined threshold, and if the predetermined data value is above or below the predetermined threshold, then the MTC user equipment 1 determines the occurrence of the predetermined event. For example, the MTC user equipment 1 is a temperature sensor, and after the temperature sensor measures the current ambient temperature value, it compares the ambient temperature value with the predetermined threshold. If the measured current ambient temperature value is above the predetermined threshold, then the potential occurrence of a fire is determined.

If the first detecting device 101 detects the occurrence of the predetermined event, then the first transmitting device 102 included in the detecting and reporting apparatus 10 transmits a first report message to the MTC server 2.

In an embodiment, when the predetermined event is that the MTC user equipment 1 is in illegal movement, for example, the taxi on which the MTC user equipment 1 is installed travels beyond a specified area, then the first report message includes information of the geographical location where the MTC user equipment 1 is currently located.

In another embodiment, when the predetermined event is that the predetermined data value measured by the MTC user equipment 1 is above a predetermined threshold, for example, the current ambient temperature detected by the MTC user equipment 1 is above a predetermined threshold, then the first report message includes information of the current ambient temperature.

When the first detecting device 101 detects the occurrence of the predetermined event, optionally, the first transmitting device 102 transmits the first report message to the MTC server 2 via a Short Message (SMS) or a General Packet Radio Service (GPRS).

In order to avoid the occurrence of the transmission error, the loss of data or other situations, in an embodiment, firstly a first encoding device (not illustrated in Fig.3 for the sake of conciseness) included in the first transmitting device 102 encodes the first report message, and then a third transmitting device (not illustrated in Fig.3 for the sake of conciseness) included in the first transmitting device 102 transmits the encoded first report message to the MTC server 2.

Optionally, the encoding includes but will not be limited to the Turbo encoding, the CRC (Cyclic Redundancy Check) encoding, etc.

In another embodiment, the first transmitting device 102 can further transmit the first report message to one or more reachable MTC servers.

Upon reception of the first report message from the MTC user equipment 1, the MTC server 2 determines the corresponding action to be taken according to the first report message. For example, the MTC user equipment 1 is recovered, the service provided to the MTC user equipment 1 is terminated, the user of the MTC user equipment 1 is charged for an extra fee, etc.

In an embodiment, when the MTC user equipment 1 is a camera and the predetermined event is that the camera is damaged, then after the MTC server 2 receives the first report message from the MTC user equipment 1, the repairer can be dispatched to repair or replace the camera immediately so as to ensure its normal operation.

In an embodiment, when the MTC user equipment 1 is an on-vehicle device and the predetermined event is that the taxi on which the on-vehicle device travels beyond a specified area, after the MTC server 2 receives the first report message from the MTC user equipment 1, an extra fee can be charged for the tenant according to information of the geographical location of the taxi included in the first report message.

After the first transmitting device 102 transmits the first report message to the MTC server 2, optionally, the second transmitting device 103 included in the detecting and reporting apparatus 10 can continue to transmit a second report message to the MTC server 2.

Optionally, the second transmitting device 103 can transmit the second report message to the MTC server 2 actively after the first transmitting device 102 transmits the first report message to the MTC server 2. For example, the second transmitting device 103 transmits the second report message to the MTC server periodically.

The second transmitting device 103 can alternatively transmit the second report message to the MTC server 2 passively. For example, the second transmitting device 103 will not transmit the second report message to the MTC server 2 until it receives a request message from the MTC server 2.

Optionally the second transmitting device 103 transmits the second report message to the MTC server via a Short Message (SMS) or a General Packet Radio Service (GPRS).

In order to avoid the occurrence of the transmission error, the loss of data or other situations, in an embodiment, firstly a second encoding device (not illustrated in Fig.3 for the sake of conciseness) included in the second transmitting device 103 encodes the second report message, and then a fourth transmitting (not illustrated in Fig.3 for the sake of conciseness) device included in the second transmitting device 103 transmits the encoded second report message to the MTC server 2.

Optionally, the encoding includes but will not be limited to the Turbo encoding, the CRC (Cyclic Redundancy Check) encoding, etc.

In another embodiment, the second transmitting device 103 can further transmit the second report message to one or more reachable MTC servers.

In an embodiment, the MTC user equipment 1 is an on-vehicle device and the predetermined event is that the taxi on which the on-vehicle device is installed travels beyond a specified area. When the first detecting device 101 included in the detecting and reporting apparatus 10 detects the occurrence of the predetermined event, the first transmitting device 102 transmits the first report message to the MTC server 2. The first report message includes information of the geographical location where the MTC user equipment 1 is currently located.

When the taxi continues traveling beyond the specified area, the second transmitting device 103 will transmit the information of the geographical location of the taxi constantly to the MTC server via the second report message.

The MTC server 2 can know the travel route of the taxi beyond the specified area through the information of the geographical location included in the second report message, and thereby charge the user for an extra fee.

In an embodiment, the MTC user equipment 1 is a temperature sensor and the predetermined event is that the current ambient temperature value measured by the temperature sensor is above a predetermined threshold. When the first detecting device 101 included in the detecting and reporting apparatus 10 detects the occurrence of the predetermined event, the first transmitting device 102 transmits the first report message to the MTC server 2. The first report message includes the current ambient temperature value measured by the temperature sensor.

Thereafter, the first detecting device 101 will detect the current ambient temperature value constantly and transmit the detected current ambient temperature value constantly to the MTC server 2 through the second report message.

The MTC server 2 takes the relevant action to prevent a fire according to the ambient temperature value included in the second report message.

It shall be noted that the technical solution of the invention has been described above merely by an example where one MTC user equipment 1 detects whether the predetermined event occurs and then transmits the first report message to the MTC server.

In another embodiment of the machine-type communication based communication system, a plurality of associated MTC user equipments can be included, and when the plurality of associated MTC user equipments detect the occurrence of the predetermined event at the same time, optionally the plurality of associated MTC user equipments can transmit only one first report message to the MTC server.

Optionally, the MTC server can specify in advance which one of the plurality of associated MTC user equipments shall transmit the first report message to the MTC server upon occurrence of the predetermined event.

Alternatively, the plurality of MTC servers can coordinate with each other to select one of the plurality of the MTC user equipments for transmission of the first report message to the MTC servers.

When there are a large number of MTC user equipments, optionally the number of transmitted first report messages shall be reduced to the possible fullest extent while encoding the transmitted first report messages for the purpose of a tradeoff between the utilization ratio of resources and the reliability of transmission.

Although the invention has been explained and described in details in the drawings and the foregoing description, it shall be appreciated that the explanation and the description are explanatory and illustrative but not limiting; and the invention shall not be limited to the foregoing embodiments.

Those ordinarily skilled in the art can understand and practice other variations to the disclosed embodiments upon review of the description, the disclosure and the drawings as well as the claims. In the claims, the term "comprising" will not preclude another element(s) and step(s), and the term "a" or "an" will not preclude plural. In a practical application of the invention, an element may perform functions of a plurality of technical features recited in a claim. Any reference numerals in the drawings shall not be construed as limiting the scope of the invention.

## Claims

1. A method of detecting and reporting in a user equipment of a machine type communication based communication system, wherein the method comprises the steps of:
a. detecting whether a predetermined event occurs; and
b. transmitting a first report message to one or more servers if the predetermined event occurs.

2. The method according to claim 1, wherein after the step b, the method further comprises the step of:
c. transmitting a second report message to the one or more servers.

3. The method according to claim 1, wherein the predetermined event comprises any one of:
- the user equipment being stolen;
- the user equipment being in an illegal movement;
- the user equipment being damaged;
- the user equipment being powered off; and
- a predetermined data value measured by the user equipment being above or below a predetermined threshold.

4. The method according to claim 1, wherein the step b further comprises the step of: transmitting the first report message to the one or more servers via a short message.

5. The method according to claim 1, wherein the step b further comprises the steps of:
- encoding the first report message; and
- transmitting the encoded first report message to the one or more servers.

6. The method according to claim 2, wherein the step c further comprises the step of: transmitting the second report message to the one or more servers via a short message.

7. The method according to claim 2, wherein the step c further comprises the steps of:
- encoding the second report message; and
- transmitting the encoded second report message to the one or more servers.

8. The method according to any one of claims 4 to 7, wherein the encoding is a Turbo encoding.

9. A detecting and reporting apparatus of detecting and reporting in a user equipment of a machine type communication based communication system, wherein the detecting and reporting apparatus comprises:
a first detecting device for detecting whether a predetermined event occurs; and
a first transmitting device for transmitting a first report message to one or more servers if the predetermined event occurs.

10. The detecting and reporting apparatus according to claim 9, wherein the detecting and reporting apparatus further comprises:
a second transmitting device for transmitting a second report message to the one or more servers.

11. The detecting and reporting apparatus according to claim 9, wherein the predetermined event comprises any one of:
- the user equipment being stolen;
- the user equipment being in an illegal movement;
- the user equipment being damaged;
- the user equipment being powered off; and
- a predetermined data value measured by the user equipment being above or below a predetermined threshold.

12. The detecting and reporting apparatus according to claim 9, wherein the first transmitting device is further for transmitting the first report message to the one or more servers via a short message.

13. The detecting and reporting apparatus according to claim 9, wherein the first transmitting device further comprises:
- a first encoding device for encoding the first report message; and
- a third transmitting device for transmitting the encoded first report message to the one or more servers.

14. The detecting and reporting apparatus according to claim 10, wherein the second transmitting device is further for transmitting the second report message to the one or more servers via a short message.

15. The detecting and reporting apparatus according to claim 10, wherein the second transmitting device further comprises:
a second encoding device for encoding the second report message; and
a fourth transmitting device for transmitting the encoded second report message to the one or more servers.
